# EUROPÄISCHE PATENTSCHRIFT

(11) **EP 0 370 033 B1**
(45) Veröffentlichungstag und Bekanntmachung des Hinweises auf die Patenterteilung: **02.11.1995**
(21) Anmeldenummer: 88905699.0
(22) Anmeldetag: 08.07.1988
(51) Int. Cl.: G01N 22/00

(54) **VERFAHREN UND VORRICHTUNG ZUR ANALYSE MITTELS MIKROWELLEN**
PROCESS AND DEVICE FOR MICROWAVE ANALYSIS
PROCEDE ET DISPOSITIF D'ANALYSE PAR MICRO-ONDES

(30) Priorität: 17.07.1987 DE 3723606
(43) Veröffentlichungstag der Anmeldung: 30.05.1990
(73) Patentinhaber: Forschungszentrum Karlsruhe GmbH, 76133 Karlsruhe (DE)
(72) Erfinder: BERGER, Lutz, D-7514 Eggenstein-Leopoldshafen (DE); KRIEG, Gunther, D-7500 Karlsruhe (DE); SCHMITT, Gerhard, D-7500 Karlsruhe (DE)
(74) Vertreter: Gottlob, Peter, Dipl. Ing.
(86) Internationale Anmeldenummer: DE8800431
(87) Internationale Veröffentlichungsnummer: WO8900684

(56) Entgegenhaltungen:
- US-A- 4 607 521
- Archiv fur Elektronik und Ubertragungstechnik, Band 40, Nr. 5, September/ Oktober 1986, (Stuttgart, DE), R. Reinschlussel et al.: "Design of a sensitive cavity spectrometer operating at 26.5 to 40 GHz for the analysis of gas mixtures", Seiten 313-320
- Instruments and Experimental Techniques, Band 17, Nr. 3, Teil II, Mai/Juni 1974, Consultants Bureau, Plenum Publishing Corp., (New York, US), A.A. Dem'yanov et al.: "Measurement of the complex permittivity of strongly absorptive liquids", Seiten 777-778 siehe Abbildung 1

## Beschreibung

Die Erfindung betrifft ein Verfahren zur Analyse von gasförmigen Medien mittels Mikrowellen-Absorption, insbesondere zur Konzentrationsbestimmung von Gasen, wobei eine Mikrowelle mit mindestens einer Frequenz erzeugt wird, sowie eine Vorrichtung zur Analyse gasförmiger Medien mittels der Absorption von Mikrowellen, insbesondere zur Konzentrationsbestimmung, vor allem zur Durchführung des Verfahrens, mit mindestens einem Mikrowellensender, mindestens einer Meßzelle, mindestens einem Detektor, Verstärkungs- und Anzeigeeinrichtungen für das Meßsignal sowie eine Steuereinrichtung für den Mikrowellensender.

Die Analyse gasfömriger Medien, ggf. nach Überführung auch eines Feststoffes oder einer Flüssigkeit in den gasförmigen Zustand durch Absorption von Mikrowellen in bestimmten charakteristischen Frequenzbereichen durch Anregung von Rotationsübergängen in Molekülen der zu untersuchenden Medien ist bekannt. Zur Reduzierung der Linienbreite, erfolgt die Untersuchung im Niederdruckbereich. Die Absorptionslinien werden mittels des Stark-Effekts aufgespalten, wobei vorzugsweise eine Stark-Wechselspannung angelegt wird, um die Nachweisempfindlichkeit zu erhöhen. Ein derartiges Verfahren ist grundsätzlich hochselektiv, erfordert aber keine vorherigen Veränderungen, wie Ionisation oder chemische Reaktionen an den zu untersuchenden Stoffen.

Das Untersuchungsverfahren konnte bisher praktisch nur im Labormaßstab eingesetzt werden. Industriell einsetzbare Vorrichtungen standen nicht zur Verfügung, da bekannte Vorrichtungen sowohl durch konstruktive, mechanische als auch elektrische Ausgestaltungen aufwendig waren, zum Teil empfindliche Komponenten aufwiesen und die Einhaltung kritischer Parameter problematisch oder aufwendig war.

So ist beispielsweise eine Stabilisierung und damit eine Regelung (im eigentlichen Sinne) der Frequenz der ausgesendeten Mikrowelle auf das zu untersuchende Absorptionsmaximum des interessierenden Moleküls, ggf. unter Berücksichtigung der einwirkenden Stark-Spannung, erforderlich. Hierzu wurde vorgeschlagen, einen Teil der Hochfrequenz der Mikrowellenstrahlung mit Hilfe eines Richtkopplers einer Mischdiode zuzuführen, dort mit der Oberwelle eines stabilen Senders niedrigerer Frequenz, die beispielsweise durch einen Quarz erzeugt wurde, zu vergleichen, durch Synchronisation mit einer PLL-Schaltung die Mikrowellenfrequenz an die Oberwelle der niedrigen Frequenz anzubinden und derart eine Stabilisierung der Hochfrequenz der Mikrowelle auf die Absorptionslinie der zu messenden Komponente zu bewirken. Weiterhin wurde vorgeschlagen, den Mikrowellensender zusätzlich zu modulieren, einen Teil der Mikrowellenstrahlung durch eine Referenzzelle mit der zu messenden Komponente zu senden, wobei zur Aufspaltung der Mikrowellenstrahlen wiederum ein Richtkoppler eingesetzt werden muß. Mit Hilfe des Ableitungssignals am zusätzlich zum Detektor der Meßzelle erforderlichen Detektor der Referenzzelle wird der Mikrowellensender auf die Absorptionslinie der zu messenden Komponente fixiert.

Zum Stande der Technik seien hier noch folgende Fundstellen zitiert:
- Archiv für Elektronik und Übertragungstechnik, Bd. 40, Nr. 5, Sept./Okt. 1986, R. Reinschlüssel et al.: "Design of a sensitive cavity spectrometer operating at 26.5 to 40 GHz for the analysis of gas mixtures", S. 313 - 320 (siehe ersten Teil des Anspruchs 5) und
- US-A 4,607,521.
- DE-A- 3622956, veröffentlicht aus 11.2.88 (entspricht internem Stand der Technik gemäß den ersten Teilen der Ansprüche 1 und 5).

Der Nachteil einer Sendermodulation ergibt sich aufgrund der hierdurch bedingten erhöhten Rauschleistungen am Detektor. Die bisherigen Mikrowellen-Verfahren und -Vorrichtungen waren, insbesondere durch die aufwendige Frequenzstabilisierung zu teuer, so daß konkurrierende, andersartige Meßverfahren und Vorrichtungen preiswerter waren.

Der Erfindung liegt die Aufgabe zugrunde, ein gattungsgemäßes Verfahren zu schaffen, das unter Verwendung der genannten Nachteile eine preiswerte Analyse gasförmiger Medien, insbesondere die Konzentrationsbestimmung ermöglicht und die Voraussetzungen für einen industriell einsetzbaren Mikrowellen-Analysator schafft.

Erfindungsgemäß wird die genannte Aufgabe durch ein Verfahren der eingangs genannten Art gelöst, welches dadurch gekennzeichnet ist, daß die Mikrowellen-Frequenz innerhalb einer vorgegebenen Bandbreite 2 · Δν kontinuierlich über die Absorptionsfrequenz νₒ des durch die Meßzelle 11 strömenden oder in Reinform in der Referenzzelle 4 eingeschlossenen Gases von einer Spannungsrampe mit dem Hub 2 · ΔU geführt wird. Dabei wird der Verlauf der Absorption der Mikrowelle in der Referenzzelle 4 gemessen und die maximale Absorption festgestellt und daraus die Abstimmungsspannung Uₒ festgelegt. Dementsprechend wird die Spannungsrampe Uₒ - ΔU < U < Uₒ + ΔU in der Steuerungseinrichtung 63 erzeugt. Der frequenzabhängige Verlauf des Detektorsignals am Detektor 19 der Meßzelle 11 wird schließlich noch die Signalverstärkung integriert. In bevorzugter Ausgestaltung ist vorgesehen, daß der Frequenzbereich für Abtastung und Integration durch ein Referenzsignal einer bekannten Reingaskomponente, die in einer Referenzzelle eingeschlossen ist, bestimmt wird. Eine weitere Ausbildung sieht vor, daß bei Aufspaltung der Absorptionslinie mittels Stark-Effekts eine Stark-Wechselspannung angelegt wird, wobei dann die Stark-Wechselspannung beim zu messenden Gas einerseits und bei der in der Referenzzelle vorhandenen Reingaskomponente andererseits phasenverschoben angelegt werden und insbesondere die Stark-Wechselspannung mit einer Phasenverschiebung von 90° angelegt wird. Hierdurch ist es ggf. möglich, sowohl für das Referenz- als auch für das Meßsignal nur einen Vorverstärker vorzusehen, wobei insbesondere die Vorverstärkung durch ein unterkritisch gedämpftes schmalbandiges passives Netzwerk erfolgen kann. Weiterhin kann vorgesehen sein, daß die Stark-Hochspannung durch eine die Stark-Kapazität unmittelbar zu einem Parallelschwingkreis ergänzende, die Hochspannungswicklung eines Transformators bildende Induktivität ergänzt wird.

Eine bevorzugte Ausgestaltung der erfindungsgemäßen Vorrichtung sieht vor, daß die Steuereinrichtung zur kontinuierlichen Steuerung einer frequenzbestimmenden Spannung für den Mikrowellensender über einen einstellbaren Frequenzbereich ausgebildet und dem Detektor ein Integrator zur Integration der Meßsignale während der Veränderung der Mikrowellenfrequenz nachgeordnet ist. Zur Steuerung der Abtastung mittels der Referenzzelle ist vorgesehen, daß der Meßzelle mindestens eine Referenzzelle parallel zugeordnet ist, deren Detektor mit der Steuereinrichtung für den Mikrowellensender verbunden ist, wobei insbesondere mindestens ein Stark-Generator vorgesehen ist, der der Meß- und ggf. der Referenzzelle ein moduliertes Stark-Signal zuführt.

Wenn mehrere Absorptionsfrequenzen untersucht werden sollen, so kann vorgesehen sein, daß mehrere Mikrowellensender unterschiedlicher Frequenzbereiche einer Meßzelle zugeordnet sind, wobei, um ein Auswechseln des Reingaserzeugers, beispielsweise eines Permeationssystems in der Referenzzelle, zu vermeiden, in Weiterbildung vorgesehen sein kann, daß mehrere Referenzzellen einer Meßzelle zugeordnet sind, wobei entweder die Referenzzellen zueinander parallel oder aber in Reihe geschaltet sind, wobei sie insgesamt auf jeden Fall parallel zur Meßzelle angeordnet sind. Bei derartigen Mehrkomponentensystemen sind die Mikrowellensender, die vorzugsweise Gunn-Oszillatoren aufweisen, durch einen Koppler einerseits mit der Meßzelle und andererseits mit der oder den Referenzzelle(n) verbunden, wobei bei mehreren Referenzzellen eine Umschaltung zwischen diesen durch entsprechende Hohlleiterschalter erfolgen kann. Wesentlich ist auch bei einer solchen Ausgestaltung, daß ansonsten die gesamte Anordnung, insbesondere auch die Auswerteelektronik gleich bleibt. Die Messung der verschiedenen Komponenten erfolgen durch Ansteuern des jeweiligen Senders und Anlegen der jeweiligen Stark-Spannungen, wobei allerdings Umschaltzeiten bedingt sein können. Insbesondere bei Messungen von zwei Komponenten werden daher bevorzugt zwei Sender vorgesehen, die über Schalter der Meßzelle zugeschaltet werden können.

Die erfindungsgemäße Ausgestaltung weist insbesondere den Vorteil auf, daß nur ein Stark-Generator eingesetzt werden muß. Darüber hinaus können aufgrund der Parallelanordnung von Meß- und Referenzzellen leistungsärmere Mikrowellensender eingesetzt werden, die preiswerter sind als leistungsstarke Sender. Darüber hinaus ist eine Thermostatisierung der Referenzzelle nicht unbedingt erforderlich, da hier mit vollständig ausmodulierten Rotationsübergängen gearbeitet wird.

Weitere Vorteile und Merkmale der Erfindung ergeben sich aus den Ansprüchen und aus der nachfolgenden Beschreibung, in der ein Ausführungsbeispiel unter Bezugnahme auf die Zeichnung erläutert ist. Dabei zeigt:

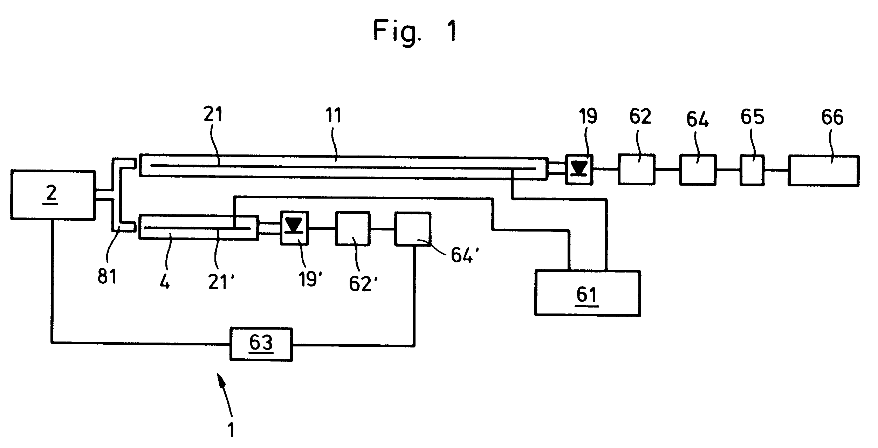

Fig. 1 eine schematische Darstellung der erfindungsgemäßen Vorrichtung und
Fig. 2 ein Diagramm einer Absorptionslinie.

Die erfindungsgemäße Vorrichtung 1 weist einen Mikrowellensender 2 auf, dem sich über den Koppler 81 parallel zueinander angeordnet die Referenzzelle 4 und die Meßzelle 11 anschließen. Der Meßzelle 11 ist der Detektor 19 und der Referenzzelle der Detektor 19′ zugeordnet. Weiterhin sind in Meß- und Referenzzelle 11, 4 Stark-Elektroden 21, 21′ angeordnet, die mit einem gemeinsamen Stark-Generator 61 verbunden sind. Das Stark-Feld in der Referenzzelle 4 ist mindestens so groß wie das in der Meßzelle 11.

Der mechanische Aufbau der Vorrichtung kann im einzelnen demjenigen der Patentanmeldung DE 36 22 956.3 entsprechen - unter Parallelanordnung von Meßzellen 11 und Referenzzelle 4 über den Koppler 81.

Insbesondere kann die Meßzelle 11, aber auch die Referenzzelle 4 ggf. zur Vermeidung großer Baulängen mäanderförmig geführt und in jeweils mehrere 180 Gradbögen und gerade Stark-KammerBereiche unterteilt sein. Der Querschnitt der Meßzelle und der Referenzzelle ist auf dem jeweiligen Mikrowellenbereich, in dem die Vorrichtung arbeiten soll, optimiert und insbesondere, wenn nur eine Frequenz analysiert werden soll, hierauf abgestimmt. Der Mikrowellensender weist vorzugsweise einen Gunn-Oszillator auf.

Wenn mehrere Gaskomponenten analysiert werden sollen, so können mehrere Sender über jeweils entsprechende Hohlleiterschalter auf einander zugehörige Meß/Referenzzellen geschaltet werden. Die Stark-Spannungen in der Meß- bzw. Referenzzelle werden jeweils entsprechend den Sendern zugeschaltet. Es kann bei einem Mehrkomponentensystem auch vorgesehen sein, daß, wenn die jeweilige Komponente für die Referenzzelle rein bereit gestellt wird, mehrere Referenzzellen hinter den ihnen jeweils zugeordneten Sendern zueinander parallel oder aber sämtlich in Reihe, insgesamt aber auf jeden Fall parallel zur Meßzelle geordnet sind und entsprechend der jeweils vorzunehmenden Messung zugeschaltet werden.

Durch die Zelle 4, 11 und eine in ihr isoliert gehaltene Elektrode 21, 21′ oder ein Septum, wird die erforderliche Stark-Kapazität gebildet. Die Stark-Spannungszuführung ist derart ausgebildet, daß sie eine die Kapazität der inneren Stark-Elektrode zu einem Parallelschwingkreis erweiternde externe Induktivität aufweist, die wiederum gleichzeitig die Hochspannungswicklung eines Transformators bilden kann.

Referenzzelle 4 und Meßzelle 11 werden temperiert, wobei sie auf der gleichen Temperatur gehalten werden können. Insbesondere in der Referenzzelle 4 ist ein konstanter Druck aufrecht zu erhalten. Hierzu ist an den Auslaß der Referenzzelle 4 eine herkömmliche Vakuumpumpe angeschlossen. Der Auslaß weist eine Kapillare auf, durch die ein konstanter Gasdurchfluß erreicht wird. Wenn nur ein Vakuumsystem verwendet wird, so ist der Kapillare ein Filter nachgeschaltet, das die zu messende Komponente absorbiert und somit verhindert, daß diese als Reinsubstanz in die Meßzelle gelangt, wo sie die Messung verfälschen würde. Die für die Referenzzelle 4 erforderliche Reinsubstanz wird durch ein diese enthaltendes Permeationsgefäß bereitgestellt, das eine separate Heizung und/oder Kühlung aufweist. Diese wird durch eine mit einem Druckaufnehmer verbundene Druckregelung in der folgenden Weise gesteuert: Wenn die Saugleistung eines Vakuumsystems variiert, können trotz der Kapillare Druckschwankungen auftreten. Diese werden über den Druckaufnehmer gemessen, der über die Druckregelung das Permeationsgefäß entweder heizt - wenn der Druck abfällt, um eine verstärkte Permeation der Reinkomponente zu erreichen - oder aber die Heizung reduziert bzw. kühlt - wenn der Druck ansteigt, um so die Permeationsleistung zu verringern. Hierdurch wird eine genaue und zuverlässige Druckregelung erreicht, wobei der Druck in der Referenzzelle 4 mindestens dem der Meßzelle 11 entspricht.

Ist es für eine Applikation etwa notwendig über die gesamte Linie in der Meßzelle 11 zu integrieren, wird der Druck in der Referenzzelle 4 höher gewählt, als der Druck in der Meßzelle 11. Das setzt in der Regel in der Referenzzelle 4 auch ein höheres Stark-Feld voraus, um dort eine vollständige Ausmodulation der Absorptionslinie zu gewährleisten. Um ein Übersprechen der relativ großen Signale, die im Referenzzweig detektiert werden, auf den Meßzweig zu verhindern, beträgt eine Phasenverschiebung zwischen Stark-Wechselspannung in der Referenzzelle 4 und der Stark-Wechselspannung 900 in der Meßzelle 11.

Die Detektoren 19, 19′ sind im dargestellten Ausführungsbeispiel mit jeweils einem eigenen Vorverstärker 62, 62′ verbunden. Meß- bzw. Referenzzweig verfügen über eigene Vorverstärker 62 bzw. 62′ sowie über eigene Lock-in-Verstärker 64 bzw. 64′. Der Integrator 65 hinter den Lock-in-Verstärker 64 liefert einen Wert, der einer Konzentration des Meßgases entspricht und über die Anzeige 66 sichtbar gemacht wird.

Die Detektoren 19, 19′ können grundsätzlich auch mit einem gemeinsamen Vorverstärker verbunden sein. Letzteres würde voraussetzen, daß der Stark-Generator 61 den beiden Zellen 4, 11 phasenverschobene Stark-Spannungen - vorzugsweise um 90° verschobene Spannungen - zuführt, so daß die beiden Meßergebnisse der Detektoren 19, 19′ jeweils hintereinander vom gemeinsamen Vorverstärker 62 erarbeitet werden können. Dem Vorverstärker 62 folgt der die Spannung des Referenzzellen-Detektors 19, aufnehmender Lock-in-Verstärker 64 zur Regelung des Mikrowellensenders 2 über die Regeleinheit 63 und der einen Integrator aufweisende Lock-in-Verstärker 64, dann der Integrator 65 und schließlich die sich diesem anschließende Anzeige 66.

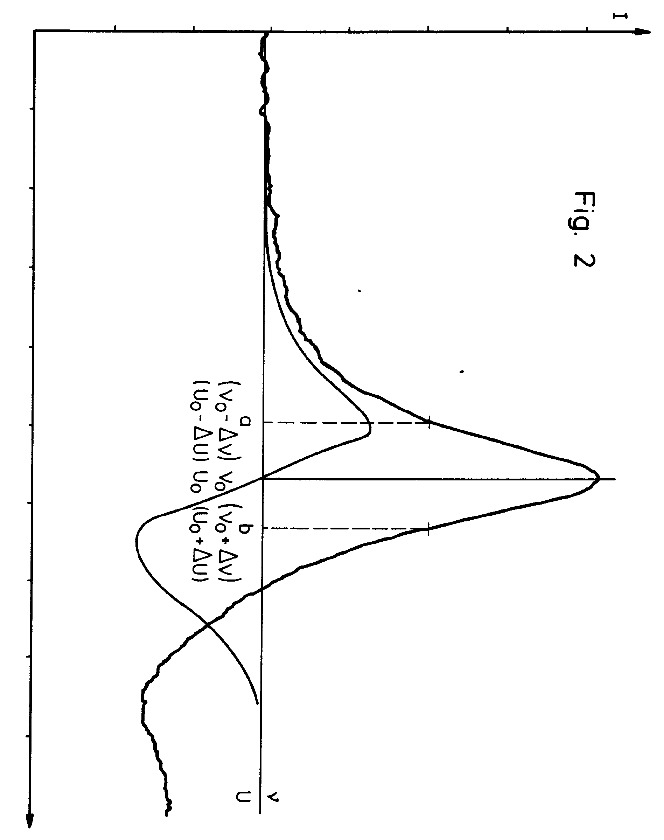

Der Referenzzweig erfüllt zwei Aufgaben:
1. Auffinden der Absorptionslinie
   Die Referenzzelle 4 enthält die zu messende Komponente in Reinform. Beim Einschalten des Geräts oszilliert das Gunnelement auf.irgendeiner Frequenz νₒ -Δν<ν<νₒ + Δνinnerhalb seines schmalbandigen Abstimmbereichs 2 · Δν (ca. 50 MHz). Eine Spannungsrampe Uₒ - ΔU bis Uₒ + ΔU, geliefert von der Elektronikeinheit 63, stimmt den Sender 2 über den Abstimmbereich ab. Bei der Absorptionsfrequenz νₒ der Meßkomponente liefert der Lock-in-Verstärker 64′ des Referenzzweiges der Regelelektronik 63 ein Signalmaximum bei einer Abstimmspannung Uₒ. Im Meßbereich wird die Abstimmspannung um einen Wert ± ΔU um diesen Wert Uₒ variiert, was eigentlich die Variation ± Δν der Frequenz um die Absorptionsfrequenz νₒ bedeutet.
2. Festlegung der Integrationsgrenzen:
   Wie dargelegt, sorgt die Elektronikeinheit 63 im Meßbereich dafür, daß die Abstimmspannung des Senders 2 zwischen den Werten Uₒ - ΔU (entspricht Punkt a in Abbildung 2 auf der Frequenzskala) variiert wird. Zwischen diesen beiden Spannungs- bzw. den jeweils dazugehörigen Frequenzwerten werden die Signale des Lock-in-Verstärkers des Meßzweiges integriert 65 und ausgegeben.

Bei dem erfindungsgemäßen Verfahren wird nun durch die Elektronik 63 die Frequenz des Mikrowellen-Hochfrequenzsenders 2 kontinuierlich über die Linie der Absorptionsfrequenz νₒ - beispielsweise 28,97 GHz bei einer Starkfeldstärke von E = 800 V/cm für Formaldehyd - geführt. Die Mikrowelle wird über den Koppler 81 aufgeteilt. Beide Zellen 11, 4 arbeiten mit der gleichen Stark-Spannung, die die Modulation der Rotationsübergänge bewirkt, jedoch wie gesagt, mit einer Phasendifferenz von 90°. Die Regelung kann beispielsweise bei a einsetzen. Durch die Regelung wird, wie der Figur 2 entnehmbar ist, eine ansteigende Spannungsrampe erzeugt; sobald die Absorptionslinie νₒ überschritten ist, was durch das in der Referenzzelle 4 befindliche Reingas bewirkte Referenzsignal (das in Figur 2 dargestellt ist) bewirkt wird, beispielsweise durch Unterschreiten eines vorgegebenen Spannungswerts einer Frequenz b, wird die Regelungsspannung am Hochfrequenzsender 2 reduziert und damit die Absorptionslinie erneut abgetastet. Nach erneutem Überschreiten schaltet die Regelung auf der anderen Seite der Linie wieder um und erhöht die Spannung, die am Oszillator anliegt. Zwischen den Spannungsumlenkpunkten wird das Signal am Detektor 19 der Meßzelle 11 durch den Integrator 65 integriert. Der Integrationswert ist ein Meß für die Konzentration des Gases in der Meßzelle 11. Die Ansprechzeit des Verfahrens ist festgelegt durch die Zeit, die zum Abtasten über die Linie benötigt wird und liegt in der Größenordnung von 30 bis 60 Sekunden, die aber in vielen Fällen genügt.

Die Verstärker sind phasenselektiv. Um 90° zueinander verschobene Meß- und Referenzsignale können durch geeignete Phasenlage der Tastzeitpunkte in Meß- und Referenzzweig der Schaltung getrennt werden. Dies geschieht dadurch, daß an dem vom Detektor aufgenommenen Signal, das Referenz- und Meßkomponenten enthält, in jedem Zweig nur die mit der Steuerspannung in Phase befindliche In-Phase-Komponente gleichgerichtet wird, während die um 90° verschobene Komponente sich heraus hebt.

Phasenverschiebungen der in den Lock-in-Verstärker gelangenden Meß- und Referenzsignale aus dem Detektor gegenüber den Stark-Wechselspannungen durch elektronische Bauteile können durch einen digitalen Phasenschieber berücksichtigt werden. Hierzu wird ein Oszillatorsignal, von dem beispielsweise die Frequenz der Stark-Spannung durch Teilung abgeleitet wurde, einem Zähler zugeführt, der durch ein Set-Signal, beispielsweise das der Stark-Wechsel-Spannung zugrundeliegende, jeweils auf seinen vorgewählten binären Wert gesetzt wird. Jeweils um eine dem binären Wert entsprechende Zeit nach dem Setzen erfolgen Ausgangsimpulse, die in bekannter Weise in eine nun um die gewünschte Phase verschobene symmetrische Welle mit der Frequenz des Set-Signals umgewandelt werden. Diese Welle bildet dann das oben erwähnte Steuersignal.

Bei einer Ausgangsfrequenz beispielsweise eines Quarz-Oszillators von 10 MHz und durch feste Teilung durch 200, kann beispielsweise eine Phasenverschiebung in 200 Schritten von jeweils 1,8° vorgenommen werden. Die Phasenverschiebung kann einmal eingeschaltet werden und ist auch bei Wiedereinschalten eines Geräts automatisch reproduzierbar. Sie kann direkt durch einen Rechner angesteuert werden. Aus dem Referenzsignal der Referenzzelle wird eine frequenzbestimmende Vorspannung gewonnen und dem Oszillator zugeführt. Wenn aufgrund des Herauslaufens der Mikrowellenfrequenz aus der Absorptionsfrequenz und damit aus dem Nulldurchgang des Referenzzellensignals eine endliche Spannung im Referenzzweig entsteht, sorgt die Regeleinheit für eine entsprechende Korrekturspannung.

Das Meßsignal kann angezeigt oder zur Steuerung von Prozessen weiter verwendet werden.

## Patentansprüche

1. Verfahren zur Analyse von gasförmigen Medien mittels Mikrowellen-Absorption und Aufspaltung der Absorptionslinie mittels Stark-Effekt, insbesondere zur Konzentrationsbestimmung von Gasen, wobei in mindestens einem Mikrowellensender eine Mikrowelle mindestens einer Frequenz erzeugt wird und in eine Referenzzelle, in der ein zu ermittelndes Gas in Reinform eingeschlossen ist, und in eine Meßzelle, durch die ein zu untersuchendes Gas strömt, eingekoppelt wird, wobei
- die Frequenz des Mikrowellensenders innerhalb einer vorgegebenen Bandbreite 2 · Δν kontinuierlich über die Absorptionsfrequenz νₒ des durch die Meßzelle (11) strömenden oder in Reinform in der Referenzzelle (4) eingeschlossenen Gases von einer Spannungsrampe mit dem Hub 2 · ΔU geführt wird;
- der Verlauf der Absorption der Mikrowelle in der Referenzzelle (4) während der Durchstimmung über einen Detektor (19′) gemessen und die maximale Absorption festgestellt wird;
- mit der maximalen Absorption die Abstimmungsspannung Uₒ und damit die Absorptionsfrequenz νₒ festgelegt wird und die Durchstimmung der Mikrowellenfrequenz von νₒ - Δν bis νₒ + Δν durch die festgelegte Spannungsrampe von Uₒ - ΔU bis Uₒ + ΔU erzeugt wird;
- der frequenzabhängige Verlauf der Absorption der Mikrowelle in der Meßzelle (4) über einen Detektor (19) gemessen und dessen Ausgangssignal nach einer Signalaufbereitung (62, 64) integriert wird.

2. Verfahren nach Anspruch 1, dadurch gekennzeichnet, daß die Stark-Wechsel-Spannungen beim zu messenden Gas und bei der Reingaskomponente zueinander um einen vorgebbaren Phasenwinkel verschoben angelegt werden.

3. Verfahren nach Anspruch 2, dadurch gekennzeichnet, daß die Detektion der Absorption in der Referenzzelle (4) und in der Meßzelle (11) um den Phasenwinkel zwischen den beiden an die Starkelektroden (21, 21′) angelegten Stark-Wechselspannungen durchgeführt wird.

4. Verfahren nach Anspruch 1, dadurch gekennzeichnet, daß die Temperatur eines mikrowellengeeigneten Permeations-Systems für die Reingaskomponente derart geregelt wird, daß der Druck in der Referenzzelle (4) konstant bleibt.

5. Vorrichtung zur Analyse gasförmiger Medien mittels der Absorption von Mikrowellen, insbesondere zur Konzentrationsbestimmung, vor allem zur Durchführung eines Verfahrens nach einem der vorangehenden Ansprüche, mit mindestens einem Mikrowellensender (2), mindestens einer Meßzelle (11), mindestens einem Detektor (19), Verstärkungs- (62, 64) und Anzeigeeinrichtungen (66) für das Meßsignal sowie eine Steuereinrichtung (63) für den Mikrowellensender (2), dadurch gekennzeichnet, daß
- zu der Meßzelle (11) mindestens eine Referenzzelle (4) parallel geordnet ist, deren Detektor (19′), ebenfalls über eine Verstärkungseinrichtung (62′, 64′), mit der Steuereinrichtung (63) für den Mikrowellensender (2) verbunden ist;
- die Steuereinrichtung (63) zur kontinuierlichen Steuerung einer Frequenz des Mikrowellensenders (2) die entsprechende Spannungsrampe erzeugt,
- dem Detektor (19) der Meßzelle (11) noch der Verstärkungseinrichtung (62, 64) ein Integrator (65) nachgeschaltet ist.

6. Vorrichtung nach Anspruch 5, dadurch gekennzeichnet, daß mindestens ein Stark-Generator (61) vorgesehen ist, der Meß- und ggf. Referenzzelle (4, 11) ein amplitudenmoduliertes Stark-Signal zuführt.

7. Vorrichtung nach Anspruch 6, dadurch gekennzeichnet, daß ein Phasenschieber zur Erzeugung einer Phasendifferenz der Stark-Spannung für Meß- und Referenzzelle (11, 4) vorgesehen ist.

8. Vorrichtung nach Anspruch 7, dadurch gekennzeichnet, daß den beiden Detektoren (19, 19′) nachgeordnete Elektroniken (62, 62′) einerseits auf die Phase des der Referenzzelle (4) zugeführten Stark-Signals und andererseits auf die Phase des der Meßzelle (11) zugeführten Stark-Signals abgestimmt sind.

9. Vorrichtung nach Anspruch 6, dadurch gekennzeichnet, daß die Zuführung für die Stark-Wechselspannung an der Meß- (11) und Referenzwelle (4) derart ausgebildet ist, daß eine die Kapazität der inneren Stark-Elektrode zu einem Parallelschwingkreis erweiternde externe Induktivität aufweist, die wiederum gleichzeitig die Hochspannungswicklung eines Transformators bildet.

10. Vorrichtung nach einem der Ansprüche 5 bis 8, dadurch gekennzeichnet, daß der bzw. die Mikrowellensender (2) jeweils einen Gunn-Oszillator aufweist bzw. Gunn-Oszillatoren aufweisen.

## Claims

1. Method of analysing gaseous media by means of microwave absorption and splitting of the absorption line by means of a Stark effect, more especially for determining the concentration of gases, a microwave with at least one frequency being generated in at least one microwave generator and being coupled into a reference cell, in which a gas to be determined is enclosed in its pure form, and into a measuring cell, through which a gas to be investigated flows, wherein
- the frequency of the microwave generator within a prescribed band width 2 · Δν is continuously conducted over the absorption frequency νₒ of the gas, which flows through the measuring cell (11) or is enclosed in the reference cell (4) in its pure form, by a voltage ramp having the range 2 · ΔU;
- the development of the absorption of the microwave in the reference cell (4) is measured during the adjustment via a detector (19′), and the maximum absorption is ascertained;
- the tuning voltage Uₒ and hence the absorption frequency νₒ are set with the maximum absorption, and the adjustment of the microwave frequency from νₒ - Δν to νₒ + Δν is produced by the set voltage ramp from Uₒ - ΔU to Uₒ + ΔU;
- the frequency-dependent development of the absorption of the microwave in the measuring cell (4) is measured via a detector (19), and the output signal of said detector is integrated downstream of a signal processing means (62, 64).

2. Method according to claim 1, characterised in that the Stark alternating voltages are applied, displaced relative to one another by a predeterminable phase angle, for the gas to be measured and for the pure gas component.

3. Method according to claim 2, characterised in that the detection of the absorption in the reference cell (4) and in the measuring cell (11) is effected through the phase angle between the two Stark alternating voltages applied to the Stark electrodes (21, 21′).

4. Method according to claim 1, characterised in that the temperature of a permeation system which is suitable for microwaves for the pure gas component is regulated in such a manner that the pressure in the reference cell (4) remains constant.

5. Apparatus for analysing gaseous media by means of the absorption of microwaves, more especially for determining the concentration, above all for accomplishing a method according to one of the preceding claims, having at least one microwave generator (2), at least one measuring cell (11), at least one detector (19), devices for amplifying (62, 64) and displaying (66) the measuring signal, and a control device (63) for the microwave generator (2), characterised in that
- at least one reference cell (4) is disposed parallel to the measuring cell (11), the detector (19′) of said reference cell being connected, likewise via an amplifying device (62′, 64′), to the control device (63) for the microwave generator (2);
- the control device (63) for the continuous control of a frequency of the microwave generator (2) produces the corresponding voltage ramp;
- an integrator (65) is connected downstream of the detector (19) of the measuring cell (11) after the amplifying device (62, 64).

6. Apparatus according to claim 5, characterised in that at least one Stark generator (61) is provided, and an amplitude-modulated Stark signal is supplied to the measuring cell (11) and possibly to the reference cell (4).

7. Apparatus according to claim 6, characterised in that a phase shifter is provided for producing a phase difference in the Stark voltage for the measuring and reference cells (11, 4).

8. Apparatus according to claim 7, characterised in that electronics (62, 62′), which are disposed downstream of the two detectors (19, 19′), are tuned, on the one hand, to the phase of the Stark signal supplied to the reference cell (4) and, on the other hand, to the phase of the Stark signal supplied to the measuring cell (11).

9. Apparatus according to claim 6, characterised in that the Stark alternating voltage at the measuring cell (11) and reference cell (4) is supplied in such a manner that one cell has an external inductance, which widens the capacity of the inner Stark electrode to form a parallel-resonant circuit, and which inductance simultaneously forms, in turn, the high-voltage winding of a transformer.

10. Apparatus according to one of claims 5 to 8, characterised in that the microwave generator (2) has a Gunn oscillator, or respectively the microwave generators (2) each have Gunn oscillators.

## Revendications

1. Procédé d'analyse de milieux gazeux par absorption de micro-ondes et division de la courbe d'absorption par l'effet Stark, notamment pour déterminer la concentration de gaz, selon lequel au moins un émetteur de micro-ondes crée une micro-onde d'au moins une fréquence pour l'induire dans une cellule de référence contenant, à l'état pur, un gaz à déterminer et dans une cellule de mesure traversée par le gaz analysé, selon lequel :
- la fréquence de l'émetteur à micro-ondes est conduite dans une largeur de bande prédéterminée 2 · Δν, en continu suivant la fréquence d'absorption νₒ du gaz traversant la cellule de mesure (11) ou du gaz à l'état pur contenu dans la cellule de référence (4), avec une rampe de tension d'excursion 2 · ΔU ;
- on mesure la courbe de l'absorption des micro-ondes dans la cellule de référence (4) pendant la détermination à l'aide d'un détecteur (19′) et on détermine l'absorption maximale ;
- avec l'absorption maximale on détermine la tension d'accord Uo et ainsi la fréquence d'absorption νₒ et on détermine la fréquence micro-ondes de νₒ - Δν jusqu'à νₒ + Δν par la rampe de tension fixée de Uₒ - ΔU jusqu'à Uₒ + ΔU ;
- on mesure la courbe dépendant de la fréquence de l'absorption de la micro-onde dans la cellule de mesure (4) à l'aide d'un détecteur (19) et on intègre le signal de sortie après une préparation du signal (62, 64).

2. Procédé selon la revendication 1, caractérisé en ce que les tensions alternatives Stark du gaz à mesurer et de la composante de gaz pur sont appliquées avec décalage d'un angle de phase prédéterminé.

3. Procédé selon la revendication 2, caractérisé en ce que la détection de l'absorption dans la cellule de référence (4) et dans la cellule de mesure (11) est faite avec décalage de l'angle de phase entre les deux tensions alternatives Stark appliquées aux deux électrodes Stark (21, 21′).

4. Procédé selon la revendication 1, caractérisé en ce qu'on règle la température d'un système de perméation convenant pour les micro-ondes, pour la composante de gaz pur pour maintenir constante la pression dans la cellule de référence (4).

5. Dispositif d'analyse de milieux gazeux par absorption de micro-ondes, notamment pour déterminer la concentration et en particulier pour la mise en oeuvre du procédé selon l'une des revendications précédentes avec au moins un émetteur de micro-ondes (2), au moins une cellule de mesure (11), au moins un détecteur (19), des installations d'amplification (62, 64) et d'affichage (66) du signal de mesure ainsi qu'une installation de commande (63) de l'émetteur à micro-ondes (2), caractérisé en ce que
- au moins une cellule de référence (4) est montée en parallèle à la cellule de mesure (11), son détecteur (19′) étant également relié par un amplificateur (62′, 64′) à l'installation de commande (63) de l'émetteur à micro-ondes (2) ;
- l'installation de commande (63) de commande en continu d'une fréquence de l'émetteur à micro-ondes (2) crée la rampe de tension correspondante ;
- un intégrateur (65) est prévu en aval du détecteur de la cellule de mesure (11) et de l'installation d'amplification (62, 64).

6. Dispositif selon la revendication 5, caractérisé par au moins un générateur Stark (61) qui applique un signal Stark modulé en amplitude à la cellule de mesure ou le cas échéant à la cellule de référence (4, 11).

7. Dispositif selon la revendication 6, caractérisé par un déphaseur pour créer une différence de phase entre la tension Stark pour la cellule de mesure et celle de la cellule de référence (11, 4).

8. Dispositif selon la revendication 7, caractérisé en ce que les électroniques (62, 62′) en aval des deux détecteurs (19, 19′) sont accordées d'une part sur la phase du signal Stark fourni à la cellule de référence (4) et d'autre part sur la phase du signal Stark appliqué à la cellule de mesure (11).

9. Dispositif selon la revendication 6, caractérisé en ce que l'alimentation pour fournir la tension alternative Stark à la cellule de mesure (11) et à la cellule de référence (4) est conçue pour avoir une inductance externe complétant la capacité de l'électrode Stark interne pour former un circuit oscillant parallèle, cette inductance constituant également l'enroulement de haute tension d'un transformateur.

10. Dispositif selon l'une des revendications 5 à 8, caractérisé en ce que le ou les émetteur(s) micro-ondes (2) comportant chaque fois un ou des oscillateurs Gunn.
